# EUROPÄISCHE PATENTSCHRIFT

(11) **EP 2 067 896 B1**
(45) Veröffentlichungstag und Bekanntmachung des Hinweises auf die Patenterteilung: **27.04.2011**
(21) Anmeldenummer: 07023459.6
(22) Anmeldetag: 04.12.2007
(51) Int. Cl.: D21F 7/08

(54) **Verfahren zur Herstellung eines Maschinenfilzes sowie Maschinenfilz**
Method for manufacturing a machine felt and machine felt
Procédé destiné à la fabrication d'un feutre de machine, ainsi que feutre de machine

(43) Veröffentlichungstag der Anmeldung: 10.06.2009
(73) Patentinhaber: Heimbach GmbH & Co.KG, 52353 Düren (DE)
(72) Erfinder: Best, Walter, Dr., 52351 Düren (DE); Burmeister, Axel, 52159 Roetgen-Rott (DE); Molls, Christian, 52070 Aachen (DE)
(74) Vertreter: Paul, Dieter-Alfred

(56) Entgegenhaltungen:
- EP-A- 1 045 066
- EP-A- 1 837 440
- US-A- 5 015 220

## Beschreibung

Die Erfindung betrifft ein Verfahren zur Herstellung eines Maschinenfilzes endlicher Länge, bei dem zunächst ein Schlauch mit zumindest einem Längsfadengelege, bestehend jeweils aus parallel verlaufenden Längsfäden, in einer Umfangslänge hergestellt wird, die der zumindest doppelten Länge des anzufertigenden Maschinenfilzes entspricht, und in einer Breite, die zumindest der Breite des anzufertigenden Maschinenfilzes entspricht, und bei dem dann der Schlauch zu einem Flachschlauch unter gegenseitiger Anlage von dessen Innenseiten und unter Ausbildung von Stirnkanten und dort von Längsfadenschlaufen zusammengedrückt wird, die durch Entfernen von Fasern einer zuvor aufgebrachten Faservliesschicht und unter Ausbildung jeweils eines sich längs der zugehörigen Stirnkante erstreckenden Kanals freigelegt werden. Die Erfindung bezieht sich des weiteren auf einen Maschinenfilz endlicher Länge mit einem Träger und mit einer an dem Träger befestigten Faservliesschicht, wobei der Träger Fäden aufweist, die übereinander angeordnete Längsfadengelege mit jeweils sich parallel und im Abstand zueinander erstrekkenden Längsfäden bilden, die an Stirnkanten des Maschinenfilzes vorstehende Längsfadenschlaufen ausbilden.

Vor allem auf dem Gebiet der Papiermaschinenbänder werden Maschinenfilze verwendet, bei denen ein aus textilen Kunststofffäden bestehender Träger mit einer Faservliesschicht aus Kunststofffasern versehen ist. Solche Papiermaschinenbänder werden vornehmlich als Pressfilze in der Pressenpartie einer Papiermaschine eingesetzt. Die Herstellung der Faservliesschicht erfolgt grundsätzlich in der weise, dass auf den Träger ein- oder beidseitig eine oder mehrere Faservliesbahnen aufgenadelt werden, die hierdurch zu Filzen verdichtet werden.

Solche Maschinenfilze werden vornehmlich endlos hergestellt. Ein hierzu geeignetes Verfahren ist der EP 0 464 258 A1 zu entnehmen. Bei diesem Verfahren wird der aus einem Gewebe oder einem Gewirke gebildete Träger dadurch aufgebaut, dass ein Trägerbahnstreifen, dessen Breite wesentlich geringer ist als die vorgesehene Breite des Trägers, wendelförmig bzw. schraubenförmig auf zwei beabstandete Walzen aufgewickelt wird, bis die vorgesehene Breite des Trägers erreicht ist. Gleichzeitig oder anschließend wird der Träger mit Faservliesbahnen in gleicher Weise belegt und mit dem Träger vernadelt. Die Seitenränder eines derart aufgebauten Filzschlauchs werden dann beschnitten, so dass sich gerade Seitenränder ergeben, die sich in Laufrichtung erstrecken.

Bei dieser Art der Herstellung verlaufen die Längsfäden aufgrund des wickelprozesses in einem Winkel zur Längsrichtung des Maschinenfilzes, und man erhält keine durchgehenden Querfäden, so dass die Querfestigkeit des Maschinenfilzes nicht sehr hoch ist. Um eine bessere Querfestigkeit zu erhalten, ist vorgeschlagen worden, die Ränder der Trägerbahnstreifen miteinander zu verbinden, beispielsweise durch Vernähen (US 5,360,656). Bei aus Längs- und Querfadengelegen hergestellten Trägern werden die Ränder der Trägerbahnstreifen nach der EP 0 947 623 A1 dadurch miteinander verbunden, dass die Querfäden des Querfadengeleges an den Rändern ineinandergreifen und dort einen Verbindungsfaden aufgelegt und mit den ineinandergreifenden Abschnitten der Querfäden verschweißt wird. Dies hat jedoch den Nachteil, dass im Bereich der Ränder ein Streifen entsteht, der wegen der unterschiedlichen Anordnung und Dichte der Fäden andere Eigenschaften, insbesondere eine geringere Durchlässigkeit, hat als die übrigen Flächen des Maschinenfilzes. Hierdurch kann es zu Markierungen auf der Papierbahn kommen.

Um dem abzuhelfen, ist in der EP 1 209 283 A1 vorgeschlagen worden, die Seitenränder der Trägerbahnstreifen mäanderartig mit aufeinanderfolgenden Vorsprüngen und Ausnehmungen auszubilden und die Trägerbahnstreifen so aneinander zu legen, dass die Vorsprünge und Ausnehmungen ineinandergreifen, wobei die Vorsprünge die Ausnehmungen vollständig ausfüllen. Die Verbindung der Ränder geschieht dann über Verbindungsmittel, beispielsweise Nähnähte oder Klebebänder. Auch hierdurch ergeben sich Änderungen in den Eigenschaften des fertigen Filzbandes im Bereich der ineinandergreifenden Ränder.

In einer Weitereritwicklung des vorbeschriebenen Wickelverfahrens ist das Problem der Querfestigkeit und der Steigerung des Volumens dadurch gelöst worden, dass man sich über die gesamte Breite des Maschinenfilzes erstrekkende Querfäden vorgesehen hat (vg1. EP 1 837 440 A1). Bei diesem Verfahren wird ein erstes endloses Trägermodul durch wendelförmiges Aufwickeln wenigstens einer Hilfsträgerbahn mit darauf vorher, währenddessen oder nach dem Wickeln aufgelaserten Längsfäden ein- oder mehrlagig angefertigt, und es werden auf dieses Trägermodul Trägermodulabschnitte ein- oder mehrlagig aufgelegt, die aus einer Hilfsträgerbahn und darauf aufgelaserten Fadengelegen bestehen, wobei die Trägermodulabschnitte so nebeneinander angeordnet werden, dass ihre Fäden in Querrichtung verlaufen. Anschließend wird zumindest eine Faservliesbahn zur Verbindung der Trägermodule und zur Ausbildung der Faservliesschicht aufgenadelt. Die jeweiligen Hilfsträgerbahnen haben lediglich die Funktion, die Längs- bzw. Querfäden während des Herstellungsvorgangs in den vorgesehenen Positionen zu halten. Beim Aufnadeln der Faservliesbahn(en) zur Ausbildung der Faservliesschicht werden die Hilfsträgerbahnen weitestgehend zerstört und damit funktionslos.

Endlose Maschinenfilze der vorbeschriebenen Art haben den Nachteil, dass sich deren Montage beispielsweise in der Pressenpartie einer Papiermaschine schwierig gestaltet. Insoweit vorteilhafter sind Maschinenfilze, die in endlicher Länge vorliegen und an ihren Stirnkanten Kupplungselemente aufweisen, über die die Enden des Maschinenfilzes erst in der Maschine miteinander nahtartig gekuppelt.werden können. Solche Maschinenfilze werden deshalb auch als Nahtfilze bezeichnet.

Zur Herstellung eines solchen Maschinenfilzes wird in der US 5,015,220 vorgeschlagen, zunächst einen Filzschlauch in einer Umfangslänge herzustellen, die etwa der doppelten Länge des anzufertigenden Maschinenfilzes entspricht, und in einer Breite, der der Breite des Maschinenfilzes entspricht. Der Filzschlauch besteht aus einem Träger mit Längs- und Querfäden, wobei die Längs- und Querfäden auch als Fadengelege vorliegen können, sowie aus einer Faservliesschicht, die durch Aufnadeln oder Aufkleben von Faservliesbahnen gebildet worden ist. Der Filzschlauch wird dann durch Zusammendrücken quer zu dessen Oberfläche zu einem Flachschlauch umgeformt, dessen Innenseiten aneinanderliegen. Der Flachschlauch hat dann in etwa die Länge des anzufertigenden Maschinenfilzes. An dessen Stirnkanten werden Querfäden und Fasern so weit entfernt, dass die in diesen Bereichen vorhandenen Längsfadenschlaufen freigelegt werden und vorstehen. An jeder Stirnkante schließen die jeweils zugehörigen Längsfadenschlaufen einen sich längs der Stirnkante erstreckenden Kanal ein. Werden die Längsfadenschlaufen beider Stirnkanten in Überlappung gebracht, entsteht ein gemeinsamer Durchsteckkanal. In diesen Durchsteckkanal kann dann ein Kupplungsdraht eingesetzt werden, der die beiden Enden des Maschinenfilzes miteinander verbindet.

Eine Weiterentwicklung dieses Maschinenfilzes ist der EP 0 947 627 A1 zu entnehmen. Nach diesem Dokument wird ein Längsfadenschlauch durch wendelförmiges Wickeln eines Längsfadens über zwei beabstandete Walzen unter Bildung von zwei übereinander angeordneten Längsfadengelegen und an den Stirnkanten von Längsfadenschlaufen hergestellt und dann in den Zwischenraum zwischen den Längsfadengelegen eine Querfadeneinlage eingeschoben. Die Querfadenlage erstreckt sich über die Breite des Längsfadenschlauchs. Sie verhindert, dass die Längsfäden beim anschließenden Aufnadeln einer Faservliesschicht ineinandergedrückt werden und es dadurch zu Fadenverlagerungen kommt, die ein nicht uniformes Eigenschaftsprofil zur Folge haben. Wie bei dem Maschinenfilz nach der US 5,015,220 können die Querfäden jedoch nicht verhindern, dass sich die Längsfäden beim Vernadeln in Querrichtung verschieben. Ihre Wirkung ist deshalb begrenzt, zumal durch den Vorgang des Einlegens ein erhöhter Herstellungsaufwand entsteht.

Der Erfindung liegt die Aufgabe zugrunde, ein Verfahren zur Herstellung eines Maschinenfilzes endlicher Länge mit einem Träger aus Fadengelegen bereitzustellen, bei dem es nicht zu einer Verlagerung der Fäden insbesondere bei der Herstellung der Faservliesschicht kommt. Eine weitere Aufgabe besteht darin, einen Maschinenfilz endlicher Länge zu konzipieren, bei dem die Fäden der Fadengelege jeweils parallel und weitgehend äquidistant zueinander verlaufen.

Der erste Teil der Aufgabe wird erfindungsgemäß dadurch gelöst, dass zunächst wenigstens eine Hilfsträgerbahn in einer Breite hergestellt wird, die geringer ist als die des anzufertigenden Maschinenfilzes, dass für die Längsfäden und/oder für die zumindest eine Hilfsträgerbahn zumindest teilweise ein Material verwendet wird, das die Eigenschaft hat, Laserenergie zu absorbieren und mittels Laserenergie zumindest oberflächlich und zumindest partiell auf Schmelztemperatur bringbar zu sein, dass die Fäden mit der Hilfsträgerbahn in deren Längsrichtung zusammengeführt und durch Einwirkung eines Laserstrahls miteinander verbunden werden, dass die Hilfsträgerbahn(en) wendelförmig solange gewickelt wird bzw. werden, bis der Schlauch gebildet ist, und dass beim Freilegen der Längsfadenschlaufen auch der dort vorhandene Teil der Hilfsträgerbahn entfernt wird.

Grundgedanke der Erfindung ist es also, den Schlauch mit dem wenigstens einen Längsfadengelege dadurch herzustellen, dass eine Hilfsträgerbahn mit darauf, währenddessen oder danach aufgelaserten Längsfäden ein- oder mehrlagig wendelförmig solange gewickelt wird, bis der Schlauch gebildet ist. Aufgrund der Einwirkung der Laserenergie gehen Fäden und Hilfsträgerbahn eine Schmelzverbindung ein. Durch Verwendung einer Hilfsträgerbahn werden die daran befestigten Längsfäden in den vorgesehenen Positinen gehalten, d.h. der Abstand, mit denen sie auf die Hilfsträgerbahn aufgebracht werden, bleibt auch in den nachfolgenden Verfahrensschritten erhalten, insbesondere wenn Faservliesbahnen zwecks Ausbildung der Faservliesschicht aufgenadelt werden. Das wendelförmige wickeln der Hilfsträgerbahn ermöglicht es, Schläuche in fast beliebiger Breite und Länge auszubilden und damit Maschinenfilze auch sehr großer Länge und Breite zu erhalten. Dabei ist zu berücksichtigen, dass der Schlauch zunächst in zumindest doppelter Länge vorliegen muss, um nach Zusammendrücken zu einem Flachschlauch ein endliches Trägergebilde zu erhalten, dessen Länge in etwa der des anzufertigenden Maschinenfilzes entspricht. Da Verlagerungen der Längsfäden insbesondere beim Herstellungsprozess vermieden werden, zeichnet sich der Maschinenfilz durch über seine Fläche uniforme Eigenschaften insbesondere bezüglich der Durchlässigkeit für Wasser aus. Das Entfernen der Hilfsträgerbahn(en) im Bereich der Längsfadenschlaufen kann auf einfache Weise durch Abschneiden und Abtrennen derjenigen Abschnitte geschehen, die mit den Längsfadenschlaufen verbunden sind.

In einfacher Form wird für den Wickelprozess nur eine Hilfsträgerbahn zusammen mit den Längsfäden von einer Seite des zu bildenden Schlauches bis zu dessen anderen Seite gewickelt und dann an den Rändern gerade beschnitten. Hierdurch entsteht bei dem Schlauch ein einlagiges Längsfadengelege, das nach zusammendrücken des Schlauchs zu dem Flachschlauch zweilagig wird. Das Wickeln kann jedoch in entgegengesetzter Richtung bis zum Ausgangspunkt fortgesetzt werden, wodurch schon bei der Herstellung des Schlauches ein zweilagiges Längsfadengelege entsteht. Alternativ oder in Kombination dazu können auch mehrere Hilfsträgerbahnen gleichzeitig oder nacheinander übereinandergewickelt werden, wodurch schon bei dem Schlauch mehrere Lagen Längsfadengelege entstehen, deren Anzahl sich beim Zusammendrücken zu dem Flachschlauch verdoppelt.

Für Maschinenfilze, an deren Querfestigkeit keine besonderen Anforderungen gestellt werden, reicht es aus, dass der Träger des Maschinenfilzes ausschließlich aus Längsfadengelegen gebildet ist. Werden höhere Anforderungen an die Querfestigkeit und das Volumen gestellt, empfiehlt es sich, dass auf der Innen und/oder Außenseite des Schlauchs - und hier zumindest über seine halbe Länge - oder zumindest auf einer der beiden Außenseiten des Flachschlauchs wenigstens ein Querfadengelege mit über die Breite des Schlauchs bzw. Flachschlauchs durchgehenden, parallel zueinander verlaufenden Querfäden aufgebracht wird. Vorzugsweise sollte dies so geschehen, dass das bzw. die Querfadengelege nach Verbinden der Stirnkanten des Flachschlauchs außenliegend ist bzw. sind, also die Papierseite bildet. Aber auch eine innenliegende Anordnung, d.h. auf der Maschinenseite, kommt in Frage.

In weiterer Ausgestaltung der Erfindung ist vorgesehen, dass zur Herstellung des Querfadengeleges zunächst einzelne Trägermodulabschnitte mit einer Erstreckung in einer Richtung der Trägermodulabschnitte hergestellt werden, die der zur Herstellung des fertigen Maschinenfilzes notwendigen Breite entspricht, wobei die Trägermodulabschnitte jeweils aus der Kombination einer Hilfsträgerbahn mit darauf befestigten Fäden gebildet sind und die Hilfsträgerbahn und/oder die Fäden die Eigenschaft haben, Laserenergie zu absorbieren und mittels Laserenergie zumindest oberflächig und zumindest partiell auf Schmelztemperatur bringbar sind, dass die Verbindung zwischen der Hilfsträgerbahn und den Querfäden durch Einwirkung eines Laserstrahls hergestellt wird und dass die Trägermodulabschnitte auf den Schlauch oder den Flachschlauch in dessen Längsrichtung nacheinander derart auf- und aneinandergesetzt werden, dass hierdurch das Querfadengelege entsteht. Die Herstellung der Trägermodulabschnitte kann dabei in der weise geschehen, dass zunächst eine Hilfsträgerbahn größerer Länge hergestellt und die Fäden aufgelasert werden und dass dann das so gebildete Band in Abständen, die der zur Herstellung des fertigen Maschinenfilzes notwendigen Breite des Maschinenfilzes entspricht, aufgeteilt wird. Das Zusammenführen der Fäden mit der Hilfsträgerbahn erfolgt dann in der gleichen Weise wie bei der Kombination von Hilfsträgerbahn und Längsfäden zwecks Herstellung des Schlauches.

Die Querfäden können den Längsfäden gleichartig sein. Sie können aber auch dicker oder dünner oder strukturell anders aufgebaut sein, sollten jedoch in ihrer Absorbtionsfähigkeit bezüglich der Laserenergie gleiche Eigenschaften haben. Auch die Fadenzahlen der Fäden pro Längseinheit müssen nicht gleich sein, d.h. insoweit können unterschiedliche Abstände zwischen diesen Fäden gegeben sein.

Die Hilfsträgerbahn(en) für die Trägermodulabschnitte sollte(n) in einer Erstreckung quer zu den Fäden von 0,4 bis 6 m hergestellt werden, vorzugsweise 3 bis 6 Meter. Für die Hilfsträgerbahn(en) für die Längsfäden reicht eine Breite von 0,2 m bis 1,5 m aus.

Damit es beim Aufbringen, insbesondere beim Aufnadeln der Faservliesbahnen nicht zu einer Zerstörung der Hilfsträgerbahn(en) und damit zu seitlichen Verlagerungen der Fäden kommt, empfiehlt es sich, für die Hilfsträgerbahn(en) Materialien zu verwenden, die eine solche Strukturfestigkeit haben, dass sie nach Fertigstellung des Maschinenfilzes in nicht oder allenfalls so beschädigtem Zustand vorliegen, dass sie noch einen Beitrag zur Positionsstabilisierung der Fäden leisten, also zwischen diesen noch Brücken bilden. Hierzu eignen sich z.B. Kunststoffnetzwerke, wie sie beispielsweise aus der EP 0 285 376 B1, EP 0 307 182 A, US 3,767,353 A, US 3,917,889 A, US 4,123,491 A bekannt sind, und/oder Faservliese und/oder gelochte Kunststoffolien, wie sie beispielsweise in der WO 92/17643, WO 98/56982 oder GB 2 254 287 A offenbart sind. Die Öffnungen in den Netzwerken bzw. Folien sollten dabei so groß sein, dass einerseits noch eine hinreichende Stabilität vorhanden ist, andererseits aber die Nadeln beim Vernadeln der Faservliesbahnen weitgehend durch diese Öffnungen hindurchgehen und damit die Hilfsträgerbahn(en) nicht oder nur wenig beschädigen. Für die Hilfsträgerbahn(en) empfiehlt sich ein Flächengewicht von 20 bis 250 g/m² , vorzugsweise von 30 bis 200 g/m².

Sofern die Fäden für Laserenergie absorptionsfähig sind, sollte(n) die Hilfsträgerbahn(en) aus einem Material bestehen, das Laserenergie wesentlich weniger absorbiert als die Fäden oder keine Laserenergie absorbiert. Dies sind in der Regel die üblichen thermoplastischen Kunststoffmaterialien wie Polyamid 4.6, 6, 6.6, 6.10, 6.12, 11 und 12 sowie Polyester, Polypropylen etc. Entsprechendes gilt für die aufzunadelnde(n) Faservliesbahn(en), wobei im Falle von mehreren Schichten unterschiedliche Faserfeinheiten vorgesehen sein können, und zwar vorzugsweise so, dass die feinsten Faserfeinheiten auf der papierseitigen Oberfläche des fertigen Maschinenfilzes zu liegen kommen.

Für die Hilfsträgerbahn und/oder die damit zu verbindenden Fäden kann ein Material verwendet werden, das ein Additiv enthält, welches die Fäden bzw. Hilfsträgerbahn für Laserenergie absorptionsfähig macht. Beispiele für solche Additive sind NIR-aktive - also im nahen Infrarotbereich wirksame - Substanzen, die zum Beispiel im Bereich der Wellenlängen 808 nm, 940 nm, 980 nm oder 1064 nm absorbieren. Hierfür kommen beispielsweise Kohlenstoffe oder farblose Additive wie Clearweld® von Gentex oder Lumogen® IR von BASF in Frage. Das Additiv erstreckt sich vorzugsweise über die gesamte Länge der Fäden. Dabei kann das Additiv in Fäden inkorporiert und/oder auf die Oberfläche der Fäden aufgetragen werden. Wenn das Additiv inkorporiert ist, sollten die Gewichtsanteile bei 0,10 % bis 2,5 % liegen.

Nach der Erfindung ist ferner vorgesehen, dass die Fäden parallel zu den Seitenkanten der Hilfsträgerbahnen angeordnet werden, vorzugsweise in gleichen Abständen. Durch den wendelförmigen Wickelprozess der mit den Längsfäden versehenen Hilfsträgerbahnen verlaufen die Längsfäden nach Fertigstellung des Schlauches nicht genau in dessen Längsrichtung, sondern ein wenig schräg dazu.

Damit gesichert ist, dass es beim Herstellungsprozess nicht zu einer Verlagerung der Hilfsträgerbahnen mit den daran befestigten Fäden kommt, ist es zweckmäßig, dass die aneinanderliegenden Ränder der Hilfsträgerbahn(en) miteinander verbunden werden. Dies kann auf verschiedene Weise geschehen.

Zum einen können die Ränder in Überlappung gebracht und dann im Überlappungsbereich miteinander verbunden werden. Praktischerweise geschieht dies so, dass einer der beiden Ränder in einer Breite von 10 bis 50 mm nicht mit Fäden belegt wird und dieser Rand dann zur Überlappung mit dem danebenliegenden, mit Fäden versehenen Rand gebracht wird. Die Verbindung der beiden Ränder kann dann durch Verschweißen mittels Ultraschall oder Verkleben geschehen. Hierzu können auch die Fäden selbst herangezogen werden, indem sie im Randbereich nochmals mit einem Laserstrahl beaufschlagt werden. Die Ränder können aber auch miteinander vernäht werden. Die Verdickung im Überlappungsbereich ist wegen der geringen Stärke für viele Anwendungsfälle hinnehmbar.

Eine Verdickung entsteht nicht, wenn die Ränder auf Stoß aneinandergelegt werden. In diesem Fall kann die Verbindung der Ränder in der weise geschehen, dass die Ränder mit aufeinanderfolgenden, komplementären Vorsprüngen und Ausnehmungen versehen werden und dass die Ränder dann so aneinandergelegt werden, dass sie mit ihren Vorsprüngen und Ausnehmungen ineinandergreifen und dass schließlich die Vorsprünge der aneinanderliegenden Ränder miteinander verbunden werden. Dabei kann die Verbindung der Vorsprünge dadurch erfolgen, dass über die Vorsprünge zumindest ein Faden, vorzugsweise parallel zu den übrigen Fäden, gelegt und dieser zumindest eine Faden - es können auch mehrere parallel verlaufende Fäden sein - mit einem Teil oder sämtlichen Vorsprüngen verbunden wird.

Verfahrensmäßig stehen hier zwei Alternativen zur Verfügung. Bei der ersten Alternative wird zumindest ein Faden nach dem Ineinandergreifen der Vorsprünge und Ausnehmungen über die Vorsprünge gelegt und dann an ihnen befestigt. Alternativ dazu kann jedoch vorgesehen sein, dass schon vor dem Ineinandergreifen der Vorsprünge und Ausnehmungen - vorzugsweise mit dem Auflegen und Befestigen der übrigen Fäden - zumindest ein Faden über die Vorsprünge und Ausnehmungen wenigstens eines Randes der jeweiligen Hilfsträgerbahn gelegt und an den Vorsprüngen befestigt wird und dass nach dem Ineinandergreifen der Vorsprünge und Ausnehmungen der zumindest eine Faden auch an den Vorsprüngen des anstoßenden Randes befestigt wird. Die Anbringung des zumindest einen Fadens vor dem Ineinandergreifen kann auf einen der beiden Ränder der jeweiligen Hilfsträgerbahn beschränkt sein, aber auch auf beiden Rändern erfolgen, und zwar vorzugsweise symmetrisch in der weise, dass der bzw. die Fäden maximal bis zur Hälfte der Breite (quer zur Längsrichtung) der Vorsprünge gehen.

Die Formgebung der Vorsprünge und Ausnehmungen ist relativ frei. Beispiele hierfür sind der EP 1 209 283 A1 zu entnehmen. Vorzugsweise sollten die Vorsprünge die Ausnehmungen vollflächig ausfüllen. Die Befestigung des zumindest einen Fadens kann auf verschiedene Weise erfolgen, vorzugsweise aber so, dass auch hierfür ein für Laserenergie absorptionsfähiger Faden genommen wird und er dann mittels eines Laserstrahls an wenigstens einem Teil der Vorsprünge, vorzugsweise an allen Vorsprüngen befestigt wird.

Zweckmäßigerweise sollten die über die Ränder verlaufenden Fäden den übrigen Fäden zumindest in Struktur und Spezifikationen entsprechen. Des weiteren sollten die Fäden auf den Rändern in einer Anzahl und in einem Abstand aufgebracht werden, dass nach dem Ineinandergreifen der Vorsprünge und Ausnehmungen die Fadendichte im Bereich der Ränder nicht von der Fadendichte im übrigen abweicht. Beide Maßnahmen dienen dazu, uniforme Eigenschaften über die Fläche des Filzbandes zu erzielen.

Nach der Erfindung ist ferner vorgesehen, dass die Faservliesschicht dadurch hergestellt wird, dass auf den Schlauch oder auf den Flachschlauch zumindest eine Faservliesbahn aufgenadelt wird. Der Begriff Nadeln ist dabei sehr allgemein zu verstehen, d.h. darunter sollen auch Vernadelungstechniken mit Flüssigkeitsstrahlen fallen.

Alternativ dazu oder in Kombination damit kann die Faservliesschicht zumindest teilweise auch dadurch hergestellt werden, dass auf die Kombination aus Hilfsträgerbahn und Fäden zumindest eine Faservliesbahn in der Breite der Hilfsträgerbahn für die Längsfäden vor oder während des Wickelns aufgenadelt wird.

Gegenstand der Erfindung ist des weiteren ein Maschinenfilz der eingangs genannten Art, der erfindungsgemäß dadurch gekennzeichnet ist, dass die Längsfäden mit Ausnahme der Längsfadenschlaufen an wenigstens einer Hilfsträgerbahn befestigt sind, die in nicht (vollständig) zerstörtem Zustand vorliegt. Der Maschinenfilz zeichnet sich also dadurch aus, dass die zu seiner Herstellung verwendete(n) Hilfsträgerbahn(en) noch erkennbar vorhanden ist bzw. sind, weil sie entweder durch den Vernadelungsprozess nicht beschädigt worden ist bzw. sind oder in ihrer Struktur nur soweit beschädigt ist bzw. sind, dass sie noch einen Beitrag dazu leistet bzw. leisten, die an ihr bzw. ihnen befestigten Fäden in der vorgesehenen Position, d.h. insbesondere äquidistant zu halten.

Die Längsfadengelege können von zumindest einem quer zur Längsrichtung wendelförmig gewickelten Längsfaden gebildet sein. Zweckmäßiger ist es jedoch, wenn die Längsfadengelege von wenigstens einer Gruppe, jeweils bestehend aus mehreren Längsfäden, gebildet sind, die quer zur Längsrichtung wendelförmig gewickelt ist und jeweils mit einer Hilfsträgerbahn verbunden ist. Aufgrund des wendelförmigen Wickelprozesses stellt sich eine Schrägstellung der Längsfäden ein. Durch Hin- und Herwickeln kann ein mehrlagiger Aufbau erhalten werden, wobei sich die Längsfäden unter einem spitzen Winkel kreuzen.

Wie schon erwähnt, kann es je nach Einsatzzweck ausreichen, wenn der Träger des Maschinenfilzes nur aus Längsfadengelegen besteht. Bei höheren Anforderungen an den Filz ist es jedoch zweckmäßig, wenn der Träger zumindest auf einer Außenseite und/oder einer Innenseite des bzw. der Längsfadengelege(s) weitere Fäden aufweist, die wenigstens ein Querfadengelege mit über die Breite des Maschinenfilzes gehenden, parallel zueinander verlaufenen Querfäden ausbilden. Dies kann in der Weise geschehen, wie vorstehend bei Beschreibung des erfindungsgemäßen Verfahrens erwähnt. Die Querfäden sollten an Hilfsträgerbahnen befestigt sein, die in nicht zerstörtem Zustand vorliegen, vorzugsweise derart, dass eine Positionsfixierung der Querfäden erfolgt. Wie bei den Längsfäden sollten die Hilfsträgerbahnen für die Querfäden ebenfalls in einem Zustand vorliegen, in dem sie entweder unbeschädigt oder nur soweit beschädigt sind, dass sie noch einen Beitrag zur Positionsfixierung leisten. Vorzugsweise sollte ein Querfadengelege ausschließlich auf derjenigen Außenseite des Längsfadengeleges bzw. der Längsfadengelege aufgebracht sein, die nach Verbinden der Stirnkanten des Maschinenfilzes außenliegend ist.

Die Eigenschaft, Laserenergie absorbieren zu können, kann mit Hilfe der vorbeschriebenen Additive erhalten werden. Die Fäden können als Monofilamente ausgebildet sein, wobei auch Bikomponentenfäden in Frage kommen, bei denen dann nur eine der beiden Komponenten das Additiv enthält. Bevorzugt sollten die Bikomponentenfäden einen Kern und einen diesen umgebenden Mantel aufweisen, wobei das Additiv dann nur in dem Mantel enthalten ist. Die Monofilamente können unterschiedliche Querschnittsformen haben, z. B. kreisförmig, oval, rechteckig, quadratisch, kleeblattförmig, sternförmig etc.

Alternativ zu oder in Kombination mit Monofilamenten können die Fäden zumindest eines Fadengeleges auch als Multifilamente, bestehend aus Einzelfilamenten, ausgebildet sein. In diesem Fall braucht nur ein Teil der Einzelfilamente mit dem Additiv versehen zu sein, wobei ein Anteil von maximal 50 % ausreichend ist. Bei der Beaufschlagung mit dem Laserstrahl versteifen sich die Multifilamente aufgrund der Verschweißung der Einzelfilamente auch teilweise untereinander.

Es kommen aber auch monofile Zwirne aus beispielsweise zwei bis zwölf Monofilamenten in Frage, wobei hier ebenfalls nicht alle Monofilamente mit Additiven versehen zu sein brauchen. Es reicht, wenn maximal 50 % davon solche Additive aufweisen. Je nach Durchführung des Prozesses können durch Verschweißen der einzelnen Monofilamente untereinander Versteifungen der Zwirne bewirkt werden.

Es kann darüber hinaus vorgesehen sein, dass alternierend unterschiedliche Fäden eingesetzt werden, beispielsweise alternierend Monofilamente und Multifilamente, Monofilamente und Zwirne oder Multifilamente. Aber auch das Material kann alternierend eingesetzt werden, beispielsweise indem alternierend Fäden aus Polyamid 6 und 6.10 oder alternierend aus Polyamid 6 und 6.12 oder alternierend aus Polyamid 6.6 und Polyamid 4,6 oder alternierend aus Polyamid und Polypropylen eingesetzt werden.

Was für die Hilfsträgerbahn(en) bezüglich ihrer Strukturfestigkeit gegenüber dem vernadelungsprozess gilt, soll erfindungsgemäß selbstverständlich auch für die Verbindung der Hilfsträgerbahnen untereinander gegeben sein, wie sie oben im Rahmen des erfindungsgemäßen Verfahrens offenbart ist. Insoweit ist es ebenfalls zweckmäßig, wenn deren Verbindung so beschaffen ist, dass sie durch den Vernadelungsprozess nicht völlig aufgelöst wird, sondern die Verbindung noch einen Beitrag zur Positionsstabilisierung der Fäden leistet.

Die Querfäden müssen sich nicht exakt im rechten Winkel zur Längsrichtung des Maschinenfilzes erstrecken. Es besteht auch die Möglichkeit, dass die Querfäden in einem Winkel von 75° bis 125°, vorzugsweise 80° bis 100°, zur Längsrichtung des Maschinenfilzes verlaufen. Sofern der Träger wenigstens zwei Querfadengelege aufweist, besteht die Möglichkeit, die Querfäden so anzuordnen, dass sich die Querfäden des einen Querfadengeleges und die Querfäden des anderen Querfadengeleges kreuzen, und zwar vorzugsweise symmetrisch, so dass die Querfäden des einen Querfadengeleges um denselben Winkel von der Senkrechten zur Längsrichtung des Maschinenfilzes abweichen wie die Querfäden des anderen Querfadengeleges, nur mit umgekehrtem Vorzeichen.

Die Längsfäden und/oder die gegebenenfalls vorhandenen Querfäden sollten zur Erzielung uniformer Eigenschaften über die Fläche gleichen Abstand zueinander haben. Dabei ist es zweckmäßig, wenn der Abstand der Längsfäden und der Abstand der Querfäden - soweit vorhanden - gleich ist. Ebenso können für die Längsfäden andere Fäden verwendet werden als für die Querfäden, aber auch identische Fäden.

Desweiteren kann die Fadenanzahl pro Längeneinheit im Längsfadengelege anders sein als im Querfadengelege. Insbesondere kann die Fadenzahl im Längsfadengelege zwischen 10 bis 100 Fäden pro cm, vorzugsweise 20 bis 50 Fäden pro cm liegen, während die Fadenzahl im Querfadengelege zwischen 20 und 100 Fäden pro cm, vorzugsweise zwischen 30 und 60 Fäden pro cm betragen kann.

Schließlich kann es nach der Erfindung vorgesehen sein, dass zwischen zwei Längsfadengelege eine weitere Materialbahn angeordnet ist, beispielsweise ein Querfadengelege, eine gelochte Folie, ein Vlies aus groben Fasern, eine Gewebebahn oder dergleichen. Sie kann bei der Herstellung des Maschinenfilzes zwischen die beiden Lagen des Flachschlauchs eingelegt werden, wobei die Befestigung dann anschließend durch Aufnadeln eines Faservlieses geschieht.

In der Zeichnung ist die Erfindung anhand eines Ausführungsbeispiels näher veranschaulicht. Es zeigen:
- Figur 1: eine Draufsicht auf eine Vorrichtung zur Herstellung eines Schlauches für den erfin- dungsgemäßen Maschinenfilz;
- Figur 2: eine Draufsicht auf einen Ausschnitt der Hilfsträgerbahn zur Herstellung des Schlauchs in zu Figur 1 vergrößerter Dar- stellung;
- Figur 3: eine Draufsicht auf einen Ausschnitt des Flachschlauchs mit darauf aufgelegten Trä- germodulabschnitten für die Herstellung ei- nes Querfadengeleges;
- Figur 4: eine Draufsicht auf einen Ausschnitt der Hilfsträgerbahn zur Herstellung des Schlauchs in zu Figur 1 vergrößerter Dar- stellung und
- Figur 5: die Schrägansicht eines Teils des Nahtbe- reichs des fertigen Maschinenfilzes.

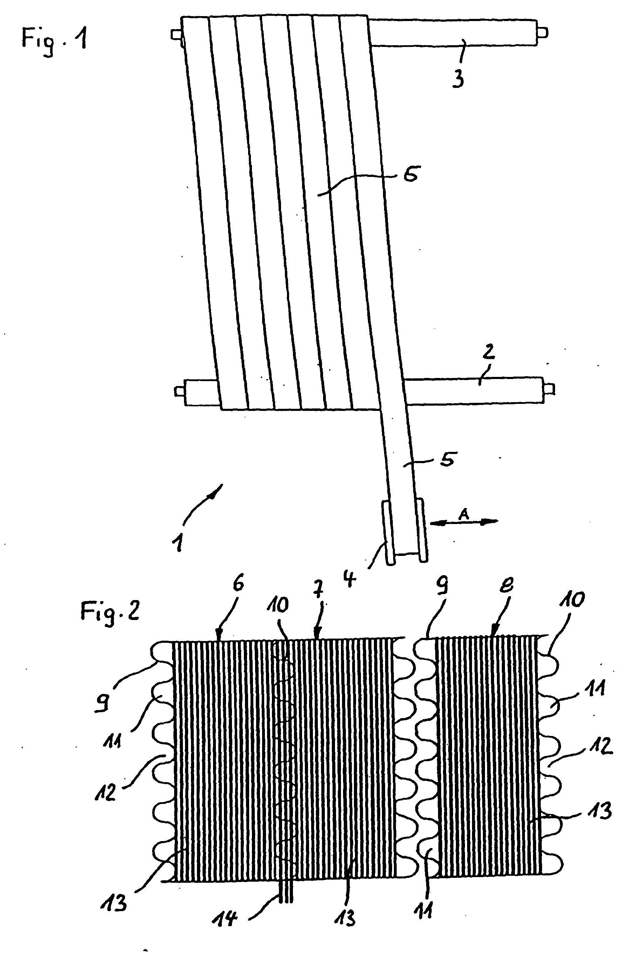

Die in Figur 1 dargestellte Vorrichtung 1 weist zwei beabstandete walzen 2, 3 auf, die parallele Drehachsen haben und gleichsinnig angetrieben sind. Im Abstand zur unteren Walze 2 befindet sich eine Vorratsrolle 4, auf der ein Kunststoffnetzband 5 aufgewickelt. Von der Vorratsrolle 4 wird das Kuriststoffnetzband 5 bei Antrieb der Walzen 2, 3 abgezogen und wickelt sich auf die beiden Walzen 2, 3 auf. Dabei wird die Vorratsrolle 4 in Richtung des Pfeils A bewegt, also parallel zu den Drehachsen der Walzen 2, 3. Hierdurch wird das Kunststoffnetzband 5 wendelförmig nach rechts fortschreitend auf die Walzen 2, 3 aufgewickelt. Der Vorschub der Vorratsrolle 4 in Richtung des Pfeils A ist dabei so bemessen, dass das Kunststoffnetzband 5 mit den einander benachbarten Rändern auf Stoß zueinander zu liegen kommt. Damit dabei keine Verkantungen auftreten, ist die Vorratsrolle 4 entsprechend schräggestellt. Der Wickelprozess wird soweit fortgesetzt, bis mittels des Kunststoffnetzbandes 5 ein ovaler Schlauch hergestellt ist, dessen Breite in etwa der Breite des herzustellenden Maschinenfilzes vor dem Thermofixieren entspricht.

In der Vergrößerung gemäß Figur 2 sind drei Teilbahnen 6, 7, 8 des Kunststoffnetzbandes 5 dargestellt. Es ist zu erkennen, dass das Kunststoffnetzband 5 - und damit die Teilbahnen 6, 7, 8 - an beiden Längsrändern 9, 10 komplementäre wellenförmige Verläufe haben, so dass abwechselnd Vorsprünge - beispielhaft mit 11 bezeichnet - und komplementäre Ausnehmungen - beispielhaft mit 12 bezeichnet - entstehen. Bei den Teilbahnen 6, 7 greifen die Vorsprünge 11 und Ausnehmungen 12 verzahnungsartig ineinander, wobei die Vorsprünge 11 die Ausnehmungen 12 vollflächig ausfüllen. Die Teilbahn 8 ist zu der Teilbahn 7 beabstandet dargestellt. Tatsächlich läuft sie so in die Vorrichtung ein, dass die Vorsprünge 11 in der gleichen weise in die Ausnehmungen 12 einfassen, wie dies bei den benachbarten Längsrändern, 9, 10 der Teilbahnen 6, 7 der Fall ist. Die links an die Teilbahn 6 anschließende Teilbahn ist weggelassen.

Wie aus Figur 2 ebenfalls zu ersehen ist (und in Figur 1 nicht dargestellt ist), sind auf dem Kunststoffnetzband 5 sich in dessen Längsrichtung erstreckende Längsfäden - beispielhaft mit 13 bezeichnet - parallel und in gleichen Abständen zueinander aufgebracht, wobei die Längsränder 9, 10 jedoch fadenlos gelassen sind. Die Längsfäden 13 bestehen aus einem thermoplastischen Kunststoff und sind mit einem Additiv versehen, das sie für Laserenergie absorptiv macht. Die Längsfäden 13 sind durch Einwirkung eines quer zu ihnen hin- und hergehenden Laserstrahls punktuell mit dem Kunststoffnetzband 5 verschweißt. Die Verbindung kann schon vor dem Aufwickeln des Kunststoffnetzbandes 5 auf die Vorratsrolle 4 in einer entsprechenden Vorrichtung hergestellt werden. In diesem Fall befindet sich auf der Vorratsrolle 4 kein reines Kunststoffnetzband 5, sondern eine Kombination aus Kunststoffnetzband 5 und darauf befestigen Längsfäden 13.

Auf die Längsränder 9, 10 bzw. die Vorsprünge 11 werden drei weitere Längsfäden - beispielhaft mit 14 bezeichnet - aufgebracht. Sie sind gleichartig mit den Längsfäden 13 und damit auch für Laserenergie absorptionsfähig. Sie werden ebenso wie die Längsfäden 13 mit einem Laserstrahl punktuell auf Schmelztemperatur erhitzt und verbinden sich dadurch mit den Vorsprüngen 11 des Kunststoffnetzbandes 5. Hierdurch werden die Längsränder 9, 10 und damit die Teilbahnen 6, 7, 8 miteinander verbunden. Die Längsfäden 14 auf den Längsrändern 9, 10 haben die gleichen Abstände zueinander und zu den benachbarten Längsfäden 13, so dass die Fadendichte im Bereich der Längsränder 9, 10 derjenigen im übrigen Bereich entspricht.

Im Beispiel gemäß Figur 2 erfolgt das Aufbringen der Längsfäden 14 auf die Längsränder 9, 10 nach Aufbringen der Längsfäden 13 zwischen den Längsrändern 9, 10. Es ist jedoch nicht ausgeschlossen, dass eine umgekehrte Reihenfolge gewählt wird, also zunächst die Verbindung der Teilbahnen 6, 7, 8 mittels Längsfäden 4 hergestellt und dann die übrigen Längsfäden 13 aufgebracht werden. Dies kann jeweils in separaten Vorrichtungen geschehen, die das Auflegen der Längsfäden 13, 14 einerseits und das Befestigen mittels eines Lasers andererseits bewirken. Es besteht jedoch auch die Möglichkeit, dies in einem Arbeitsgang durchzuführen, wenn diese Vorrichtung zwischen den Walzen 2, 3 angeordnet wird und gleichzeitig die Längsfäden 13, 14 nebeneinander aufgelegt und fixiert werden. In diesem Fall ist es allerdings erforderlich, dass die beiden Walzen 2, 3 entgegen der Richtung des Pfeils A bewegt werden und die Vorratsrolle 4 ortsfest gehalten wird.

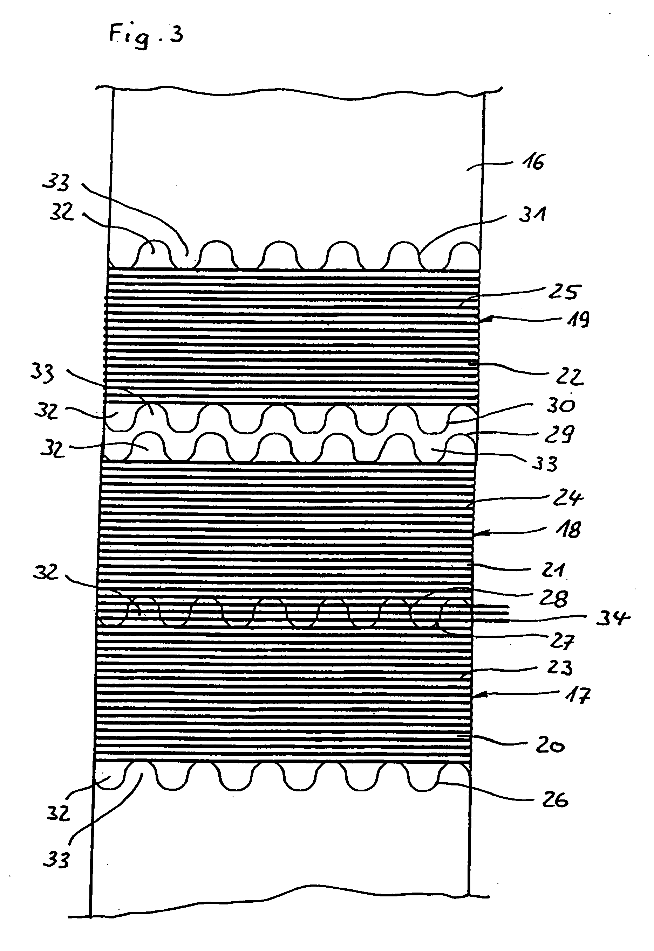

Figur 3 zeigt - ausschnittsweise - in etwa in dem Maßstab gemäß Figur 1, jedoch wesentlich gegenüber Figur 2 verkleinert, einen Flachschlauch 16, der dadurch hergestellt worden ist, dass der auf der Vorrichtung 1 gemäß Figur 1 fertiggestellte Schlauch nach Abnahme von den Walzen 2, 3 zusammengedrückt wird, so dass die von dem Kunststoffnetzband 5 gebildeten Innenseiten des Schlauchs in gegenseitige Anlagekommen. Hierdurch ergibt sich ein flächiges Gebilde in der Breite des auf der Vorrichtung gemäß Figur 1 gebildeten Schlauches und in einer Länge, die in etwa dem freien Abstand der walzen 2, 3 der Vorrichtung 1 zuzüglich deren Durchmesser entspricht. Der Flachschlauch 16 hat die Länge und Breite des fertigen Maschinenfilzes, allerdings mit einem die Schrumpfung beim anschließenden Thermofixieren zu berücksichtigenden Übermaß. Die hier eigentlich sichtbaren Längsfäden 13, 14 sind nicht eingezeichnet.

Auf die Oberseite des Flachschlauchs 16 werden Trägermodulabschnitte 17, 18, 19 aufgelegt. Diese Trägermodulabschnitte 17, 18, 19 sind genauso aufgebaut wie die Kombination aus Kunststoffnetzband 5 und Längsfäden 13, aus dem der Schlauch auf der Vorrichtung gemäß Figur 1 hergestellt worden ist. Sie bestehen jeweils aus einem Kunststoffnetzband 20, 21, 22, auf die Querfäden - beispielhaft jeweils mit 23, 24, 25 bezeichnet - aufgebracht sind. Die Querfäden 23, 24, 25 sind gleichartig mit den Längsfäden 13, 14 auf dem Kunststoffnetzband 5 (in Figur 3 weggelassen) und sind deshalb auch in gleicher weise mittels eines Laserstrahls an dem Kunststoffnetzband 20, 21, 22 befestigt. Sie haben jeweils den gleichen Abstand zueinander. Die Trägermodulabschnitte 17, 18, 19 sind mit den Querfäden 23, 24, 25 zuunterst auf den Flachschlauch 16 aufgelegt, so dass die Querfäden 23, 24, 25 Kontakt zu den Längsfäden 13, 14 haben.

Die Trägermodulabschnitte 17, 18, 19 weisen Querränder 26 bis 31 auf, die frei von Querfäden 23, 24, 25 gelassen sind. Sie sind in der gleichen Weise wie die Längsränder 9, 10 des Kunststoffnetzbandes 5 mit aufeinanderfolgenden Vorsprüngen - beispielhaft mit 32 bezeichnet - und mit komplementären Ausnehmungen - beispielhaft mit 33 bezeichnet - versehen. An dem oberen Querrand 27 des unteren Trägermodulabschnittes 17 ist der untere Querrand 28 des mittleren Trägermodulabschnittes 18 so angesetzt, dass deren Vorsprünge 32 und Ausnehmungen 33 verzahnungsartig ineinandergreifen. Über die Vorsprünge 32 sind drei Querfäden - beispielhaft mit 34 bezeichnet - gelegt und an ihnen befestigt. Über die Querfäden 34 werden die beiden Trägermodulabschnitte 17, 18 miteinander verbunden. Die Befestigung kann auch hier mittels eines Laserstrahls erfolgen.

Der obere Trägermodulabschnitt 19 ist zwar auf den Flachschlauch 16 aufgelegt. Zur Verbindung mit dem mittleren Trägermodulabschnitt 18 muss der obere Trägermodulabschnitt 19 noch soweit in Richtung auf den mittleren Trägermodulabschnitt 18 verschoben werden, dass die Vorsprünge 32 am unteren Querrand 30 in die Ausnehmungen 33 am oberen Querrand 29 des mittleren Trägermodulabschnittes 18 in der gleichen weisen einfassen wie zwischen den Trägermodulabschnitten 17, 18. Dann können auch hier weitere drei Querfäden aufgelegt und mit den Vorsprüngen 32 verbunden werden. Auf diese Weise werden nacheinander weitere Trägermodulabschnitte an den jeweils vorausgegangenen Trägermodulabschnitt angelegt und jeweils mit diesem verbunden, bis der Flachschlauch 16 an einer Seite vollständig von Trägermodulabschnitten 17, 18, 19 bedeckt ist. Darüber können dann im Grundsatz beliebig viele weitere Trägermodulabschnitte aufgebaut werden. Selbstverständlich besteht auch die Möglichkeit, dies an der anderen Flachseite des Flachschlauchs 16 vorzunehmen.

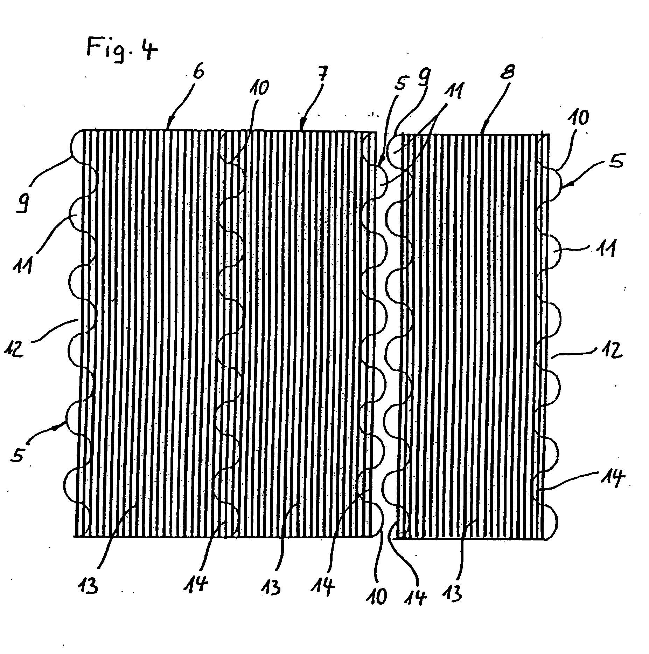

Figur 4 stellt eine analoge Darstellung von Figur 2 dar, wobei jedoch der Herstellungsvorgang anders ist. Dabei werden für gleiche Teile gleiche Bezugsziffern verwendet.

Wie bei der Ausführungsform gemäß Figur 2 sind drei Teilbahnen 6, 7, 8 des Kunststoffnetzbandes 5 teilweise dargestellt. Die Teilbahnen 6, 7, 8 haben jeweils an beiden Längsrändern 9, 10 komplementäre wellenförmige Vorsprünge 11 aus Kunststoffnetzband 5 und dazu komplementäre Ausnehmungen 12. Bei den Teilbahnen 6, 7 greifen die Vorsprünge 11 und Ausnehmungen 12 schon verzahnungsartig ineinander, während dies bei der Teilbahn 8 in Bezug zur Teilbahn 7 noch nicht der Fall ist.

Auf dem Kunststoffnetzband 5 und damit auf den Teilbahnen 6, 7 erstrecken sich in Längsrichtung Längsfäden - beispielhaft mit 13 bezeichnet - parallel und in gleichen Abständen zueinander. Sie sind durch Einwirkung eines quer hin- und hergehenden Laserstrahls punktuell mit dem Kunststoffnetzband 5 verschweißt.

Im Unterschied zu der Verfahrensweise bei dem Ausführungsbeispiel gemäß Figur 2 werden - wie insbesondere die Teilbahn 8 zeigt - vorzugsweise zusammen mit den Längsfäden 13 weitere Längsfäden - beispielhaft mit 14 bezeichnet - auf das Kunststoffnetzband 5 aufgebracht, die sich über die Vorsprünge 11 und Ausnehmungen 12 erstrecken, und zwar an beiden Längsrändern 9, 10. Diese Längsfäden 14 sind mit den Vorsprüngen 11 durch Einwirken eines Laserstrahls in der gleichen weise wie die Längsfäden 13 mit dem Kunststoffnetzband 5 verschweißt. Die Längsfäden 14 haben untereinander und zu den Längsfäden 13 gleiche Abstände und verlaufen parallel zu diesen. Über die Vorsprünge 11 und die Ausnehmungen 12 werden jeweils Längsfäden 14 verlegt, so dass die Hälfte der Erstreckung der Vorsprünge 11 quer zur Erstreckung der Längsfäden 13, 14 frei bleibt.

Das Aufbringen der Längsfäden 13, 14 auf das Kunststoffnetzband 5 kann schon vor dem Aufwickeln des mit den Längsfäden 13, 14 versehenen Kunststoffnetzbandes auf die Vorratsrolle 4 in einer entsprechenden Vorrichtung erfolgen. Es besteht jedoch auch die Möglichkeit, die Längsfäden 13, 14 erst beim oder nach dem Abwickeln des Kunststoffnetzbandes 5 von der Vorratsrolle 4 aufzubringen und dann die Teilbahnen 6, 7, 8 derart aneinanderzulegen, dass die Vorsprünge 11 in die Ausnehmungen 12 verzahnungsartig ineinandergreifen. Wie an den Beispielen der Teilbahnen 6, 7 zu ersehen, ergänzen sich die Längsfäden 14 durch das vollständige Ineinandergreifen der Vorsprünge 11 und Ausnehmungen 12 derart, dass die Fadendichte in diesem Bereich gleich der Fadendichte der Längsfäden 13 im übrigen Bereich ist und auf diese Weise ein uniformes Längsfadengelege entsteht (die Tatsache, dass die schon aneinanderliegenden Teilbahnen 6, 7 im Bereich der Vorsprünge 11 und Ausnehmungen 12 nur von drei Längsfäden 14 überdeckt werden, während sich über die Vorsprünge 11 und Ausnehmungen 12 der beiden noch nicht aneinanderliegenden Teilbahnen 7, 8 insgesamt vier Längsfäden 14 erstrecken, beruht lediglich auf einer zeichnerischen Ungenauigkeit).

Nach dem Ineinandergreifen werden die Längsfäden 14 am Längsrand 9 mit den Vorsprüngen 11 am Längsrand 10 durch Einwirken eines Laserstrahls verbunden. Umgekehrt werden die Längsfäden 14 am Längsrand 10 mit den Vorsprüngen am anliegenden Längsrand 9 ebenfalls durch Lasern verbunden.

Die vorstehend beschriebene Art der Verbindung der Längsränder 9, 10 kann auch bei der Verbindung der Trägermodulabschnitte 17, 18, 19 gemäß Figur 3 entsprechend angewandt werden. Die Trägermodulabschnitte 17, 18, 19 sind dann nicht nur mit den Querfäden 23, 24, 25 versehen, sondern zusätzlich - und gleichzeitig mit den Querfäden 23, 24, 25 aufgebracht - mit Querfäden 34, die sich über die halbe Höhe der Vorsprünge 32 und Ausnehmungen 33 erstrecken. Erst dann werden die Trägermodulabschnitte 17, 18, 19 nacheinander aneinandergelegt und wie die Teilbahnen 6,7, 8 in vorbeschriebener Weise miteinander verbunden.

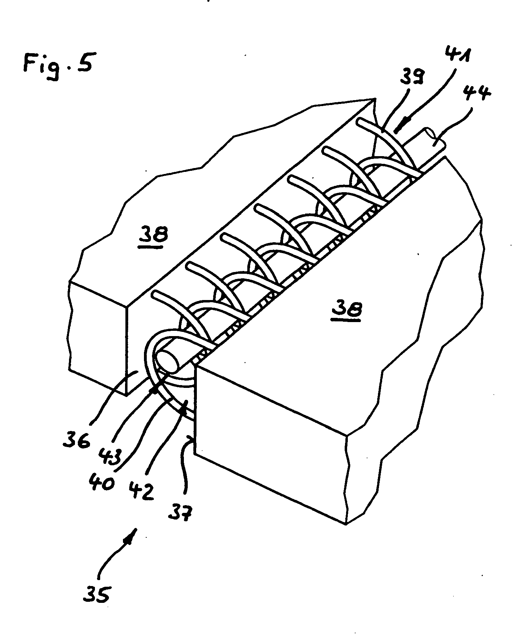

Wie Figur 5 zeigt, entsteht durch das Flachdrücken des auf der Vorrichtung 1 gemäß Figur 1 gefertigten Schlauchs ein Maschinenfilz 35 mit sich quer zu den Längsfäden 13, 14 erstreckenden Stirnkanten 36, 37, in deren Bereich die Längsfäden 13, 14 um 180° umgebogen sind. Allerdings sind die Längsfäden 13, 14 auch in diesem Bereich durch die zuvor aufgebrachte Faservliesschicht 38 zunächst matrixartig abgedeckt. Um die Längsfäden 13, 14 zur Verbindung der Stirnkanten 36, 37 des Maschinenfilzes 35 nutzen zu können, werden die Längsfäden 13, 14 in diesem Bereich von Fasermaterial der Faservlieschicht 38 befreit, so dass von den Stirnkanten 36, 37 vorstehende Längsfadenschlaufen - beispielhaft mit 39, 40 bezeichnet - freigelegt werden. Die Längsfadenschlaufen 39, 40 bilden jeweils längs der Stirnkanten 36, 37 verlaufende Kanäle 41, 42.

Zur Verbindung der Stirnkanten 36, 37 des Maschinenfilzes 35 werden die Längsfadenschlaufen 39, 40 - wie in Figur 5 dargestellt - in Überlappung gebracht, so dass immer eine Längsfadenschlaufe 39 an der Stirnkante 36 zwischen zwei Längsfadenschlaufen 40 an der anderen Stirnkante 37 einfasst. Umgekehrt gilt das gleiche. Hierdurch wird von den Längsfadenschlaufen 39, 40 ein gemeinsamer Kupplungskanal 43 gebildet, durch den ein Kupplungsdraht 44 hindurchgesteckt werden kann, wie dies aus Figur 5 ersichtlich ist. Der Kupplungsdraht 44 verbindet dann die Stirnkanten 36, 37 des Maschinenfilzes 35 scharnierartig.

## Patentansprüche

1. Verfahren zur Herstellung eines Maschinenfilzes (35) endlicher Länge, bei dem zunächst ein Schlauch mit zumindest einem Längsfadengelege, bestehend jeweils aus parallel verlaufenden Längsfäden (13, 14), in einer Umfangslänge hergestellt wird, die der zumindest doppelten Länge des anzufertigenden Maschinenfilzes (35) entspricht, und in einer Breite, die zumindest der Breite des anzufertigenden Maschinenfilzes (35) entspricht, und bei dem dann der Schlauch zu einem Flachschlauch (16) unter gegenseitiger Anlage von dessen Innenseiten und unter Ausbildung von Stirnkanten (36, 37) und dort von Längsfadenschlaufen (39, 40) zusammengedrückt wird, die durch Entfernen von Fasern einer zuvor aufgebrachten Faservliesschicht (38) unter Ausbildung jeweils eines sich längs der zugehörigen Stirnkante (36, 37) erstreckenden Kanals (41, 42) freigelegt werden, **dadurch gekennzeichnet, dass** zunächst wenigstens eine Hilfsträgerbahn (5) in einer Breite hergestellt wird, die geringer ist als die des anzufertigenden Maschinenfilzes (35), dass für die Längsfäden (13, 14) und/oder für die zumindest eine Hilfsträgerbahn (5) zumindest teilweise ein Material verwendet wird, das die Eigenschaft hat, Laserenergie zu absorbieren und mittels Laserenergie zumindest oberflächig und zumindest partiell auf Schmelztemperatur bringbar zu sein, dass die Längsfäden (13, 14) mit der dazugehörigen Hilfsträgerbahn (5) in deren Längsrichtung zusammengeführt und durch Einwirkung eines Laserstrahls miteinander verbunden werden, dass die Hilfsträgerbahn(en) (5) wendelförmig solange gewickelt wird bzw. werden, bis der Schlauch gebildet ist, und dass beim Freilegen der Längsfadenschlaufen (39, 40) auch der dort vorhandene Teil der Hilfsträgerbahn(en) (5) entfernt wird.

2. Verfahren nach Anspruch 1, **dadurch gekennzeichnet, dass** auf der Innen- und/oder Außenseite des Schlauchs oder zumindest auf einer der beiden Außenseiten des Flachschlauchs (16) wenigstens ein Querfadengelege mit über die Breite des Schlauchs bzw. Flachschlauchs (16) durchgehenden parallel zueinander verlaufenden Querfäden (23, 24, 25, 34) aufgebracht wird.

3. Verfahren nach Anspruch 2, **dadurch gekennzeichnet, dass** das bzw. die Querfadengelege so aufgebracht wird bzw. werden, dass es bzw. sie nach Verbinden der Stirnkanten (36, 37) des Maschinenfilzes (35) außen- und/oder innenliegend ist bzw. sind.

4. Verfahren nach Anspruch 2 oder 3, **dadurch gekennzeichnet, dass** zur Herstellung des Querfadengeleges zunächst einzelne Trägermodulabschnitte (17, 18, 19) mit einer Erstreckung in einer Richtung der Trägermodulabschnitte (17, 18, 19) hergestellt werden, die der zur Herstellung des fertigen Maschinenfilzes (35) notwendigen Breite entspricht, wobei die Trägermodulabschnitte (17, 18, 19) jeweils aus der Kombination einer Hilfsträgerbahn (20, 21, 22) mit darauf befestigten Fäden (23, 24, 25, 34) gebildet sind, und dass die Hilfsträgerbahn (20, 21, 22) und/oder die Fäden (23, 24, 25, 34) die Eigenschaft haben, Laserenergie zu absorbieren und mittels Laserenergie zumindest oberflächig und zumindest partiell auf Schmelztemperatur bringbar sind, dass die Verbindung zwischen der Hilfsträgerbahn(en) (20, 21, 22) und den Fäden (23, 24, 25, 34) durch Einwirkung eines Laserstrahls hergestellt wird und dass die Trägermodulabschnitte (17, 18, 19) auf den Schlauch oder den Flachschlauch (16) in dessen Längsrichtung nacheinander derart auf- und aneinander gesetzt werden, dass hierdurch das Querfadengelege entsteht.

5. Verfahren nach Anspruch 4, **dadurch gekennzeichnet, dass** die Hilfsträgerbahn(en) (20, 21, 22) für die Trägermodulabschnitte (17, 18, 19) in einer Erstreckung quer zu den Fäden (23, 24, 25, 34) von 0,4 bis 6 m hergestellt wird.

6. verfahren nach einem der Ansprüche 1 bis 5, **dadurch gekennzeichnet, dass** die Hilfsträgerbahn(en) (5) für die Längsfäden (13, 14) in einer Breite von 0,2 m bis 1,5 m hergestellt wird bzw. werden.

7. Verfahren nach einem der Ansprüche 1 bis 6, **dadurch gekennzeichnet, dass** die Hilfsträgerbahn(en) (5, 20, 21, 22) eine solche Strukturfestigkeit hat bzw. haben, dass sie nach Fertigstellung des Maschinenfilzes in nicht oder allenfalls derart beschädigtem Zustand vorliegen, dass sie die Fäden (13, 14, 23, 24, 25, 34) noch positionsstabilisierend verbinden.

8. Verfahren nach einem der Ansprüche 1 bis 7, **dadurch gekennzeichnet, dass** für die Hilfsträgerbahn(en) (5, 20, 21, 22) ein Netzwerk, ein Faservlies und/oder eine gelochte Folie verwendet wird bzw. werden.

9. Verfahren nach einem der Ansprüche 1 bis 8, **dadurch gekennzeichnet, dass** die Hilfsträgerbahn(en) (5, 20, 21, 22) ein Flächengewicht von 20 bis 250 g/m², vorzugsweise von 30 bis 200 g/m² hat bzw. haben.

10. Verfahren nach einem der Ansprüche 1 bis 9, **dadurch gekennzeichnet, dass** die Fäden (13, 14, 23, 24, 25, 34) parallel zu den parallelen Seitenkanten der jeweiligen Hilfsträgerbahn (5, 20, 21, 22) angeordnet werden.

11. Verfahren nach einem der Ansprüche 1 bis 10, **dadurch gekennzeichnet, dass** für die Fäden (13, 14, 23, 24, 25, 34) und/oder die zumindest eine Hilfsträgerbahn (5, 20, 21, 22) ein Material verwendet wird, das ein Additiv enthält, welches die Fäden (13, 14, 23, 24, 25, 34) bzw. die Hilfsträgerbahn(en) (5, 20, 21, 22) für Laserenergie absorptionsfähig macht.

12. Verfahren nach einem der Ansprüche 1 bis 11, **dadurch gekennzeichnet, dass** die aneinanderliegenden Ränder (9, 10; 26-31) der Hilfsträgerbahn(en) (5, 20, 21, 22) miteinander verbunden werden.

13. Verfahren nach Anspruch 12, **dadurch gekennzeichnet, dass** die Ränder in Überlappung gebracht werden und im Überlappungsbereich miteinander verbunden werden.

14. Verfahren nach Anspruch 12, **dadurch gekennzeichnet, dass** die Ränder (9, 10; 26-31) auf Stoß aneinandergelegt werden.

15. Verfahren nach einem der Ansprüche 12 bis 14, **dadurch gekennzeichnet, dass** die Ränder miteinander vernäht und/oder verschweißt und/oder verklebt werden.

16. Verfahren nach Anspruch 14 oder 15, **dadurch gekennzeichnet, dass** die Ränder (9, 10; 26-31) mit aufeinanderfolgenden, komplementären Vorsprüngen (11, 32) und Ausnehmungen (12, 33) versehen werden und dass die Ränder (9, 10; 26-31) so aneinandergelegt werden, dass sie mit ihren Vorsprüngen (11, 32) und Ausnehmungen (12, 33) ineinandergreifen und dass Vorsprünge (11, 32) der aneinanderliegenden Ränder (9, 10; 26-31) miteinander verbunden werden.

17. Verfahren nach Anspruch 16, **dadurch gekennzeichnet, dass** nach dem Ineinandergreifen der Vorsprünge (11, 32) und Ausnehmungen (12, 33) zumindest ein Faden (14, 34) über die Vorsprünge (11, 32) gelegt und an ihnen befestigt wird.

18. Verfahren nach Anspruch 17, **dadurch gekennzeichnet, dass** vor dem Ineinandergreifen der Vorsprünge (11, 32) und Ausnehmungen (12, 33) zumindest ein Faden (14, 34) über die Vorsprünge (11, 32) und Ausnehmungen (12, 33) gelegt und an wenigstens einem Rand (9, 10; 26-31) an den Vorsprüngen (11, 32) befestigt wird und dass nach dem Ineinandergreifen der Vorsprünge (11, 32) und Ausnehmungen (12, 33) der zumindest eine Faden (14, 34) auch an den Vorsprüngen (11, 32) des anstoßenden Randes (9, 10; 26-31) befestigt wird.

19. Verfahren nach Anspruch 18, **dadurch gekennzeichnet, dass** an den Vorsprüngen (11, 32) beider Ränder (9, 10; 26-31) der Hilfsträgerbahn(en) (5, 20, 21, 22) zumindest ein Faden (14, 34) befestigt wird.

20. verfahren nach einem der Ansprüche 14 bis 19, **dadurch gekennzeichnet, dass** die über die Ränder (9, 10; 26-31) verlaufenden Fäden (14, 34) den übrigen Fäden (13, 23, 24, 25) entsprechen.

21. Verfahren nach einem der Ansprüche 16 bis 20, **dadurch gekennzeichnet, dass** die Fäden (14, 34) auf den Vorsprüngen (11, 32) in einer Anzahl und in einem Abstand aufgebracht werden, dass die Fadendichte nach dem Ineinandergreifen im Bereich der Ränder (9, 10; 26-31) nicht von der Fadendichte im übrigen abweicht.

22. Verfahren nach einem der Ansprüche 1 bis 21, **dadurch gekennzeichnet, dass** die Faservliesschicht (38) **dadurch** hergestellt wird, dass auf den Schlauch oder auf den Flachschlauch (16) zumindest eine Faservliesbahn aufgenadelt wird.

23. Verfahren nach einem der Ansprüche 1 bis 22, **dadurch gekennzeichnet, dass** die Faservliesschicht (38) zumindest teilweise **dadurch** hergestellt wird, dass auf die Kombination aus Hilfsträgerbahn (5, 20, 21, 22) und Fäden (13, 14, 22, 23, 24, 34) zumindest eine Faservliesbahn in der Breite der Hilfsträgerbahn (5, 20, 21, 22) vor oder während des wickelns aufgenadelt wird.

24. Maschinenfilz (35) endlicher Länge mit einem Träger und mit einer an dem Träger befestigten Faservliesschicht (38), wobei der Träger Fäden (13, 14, 22, 23, 24, 34) aufweist, die übereinander angeordnete Längsfadengelege mit jeweils sich parallel und im Abstand zueinander erstreckenden Längsfäden (13, 14) bilden, die an Stirnkanten (36, 37) des Maschinenfilzes (35) vorstehende Längsfadenschlaufen (39, 40) ausbilden, **dadurch gekennzeichnet, dass** die Längsfäden (13, 14) mit Ausnahme der Längsfadenschlaufen (39, 40) an wenigstens einer Hilfsträgerbahn (5) befestigt sind, die in nicht zerstörtem Zustand vorliegt.

25. Maschinenfilz nach Anspruch 24, **dadurch gekennzeichnet, dass** die Längsfadengelege von zumindest einem quer zur Längsrichtung wendelförmig gewickelten Längsfaden gebildet sind.

26. Maschinenfilz nach Anspruch 25, **dadurch gekennzeichnet, dass** die Längsfadengelege von wenigstens einer Gruppe, jeweils bestehend aus mehreren Längsfäden (13, 14), gebildet sind, die quer zur Längsrichtung wendelförmig gewickelt sind.

27. Maschinenfilz nach einem der Ansprüche 24 bis 26, **dadurch gekennzeichnet, dass** der Träger zumindest auf einer Außenseite der Längsfadengelege weitere Fäden (23, 24, 25, 34) aufweist, die wenigstens ein Querfadengelege mit über die Breite des Maschinenfilzes (35) durchgehenden, parallel zueinander verlaufenden Querfäden (23, 24, 25, 34) ausbilden.

28. Maschinenfilz nach Anspruch 27, **dadurch gekennzeichnet, dass** ein Querfadengelege ausschließlich auf diejenige Außenseite der Längsfadengelege aufgebracht ist, die nach Verbinden der Stirnkanten (36, 37) des Maschinenfilzes (35) außenliegend und/oder innenliegend ist.

29. Maschinenfilz nach den Ansprüchen 27 und 28, **dadurch gekennzeichnet, dass** die Fadenzahl pro Längeneinheit der Längsfadengelege anders ist als im Querfadengelege.

30. Maschinenfilz nach Anspruch 27 oder 28, **dadurch gekennzeichnet, dass** die Fadenzahl im Querfadengelege zwischen 20 und 100 Fäden pro cm beträgt, vorzugsweise zwischen 30 und 60 Fäden pro cm.

31. Maschinenfilz nach einem der Ansprüche 24 bis 30, **dadurch gekennzeichnet, dass** die Fadenzahl der Längsfadengelege zwischen 10 und 100 Fäden pro cm, vorzugsweise zwischen 20 und 50 Fäden pro cm beträgt.

32. Maschinenfilz nach einem der Ansprüche 24 bis 31, **dadurch gekennzeichnet, dass** Fäden (13, 14, 23, 24, 25, 34) ein Additiv enthalten, das sie für Laserenergie absorptionsfähig macht.

33. Maschinenfilz nach Anspruch 32, **dadurch gekennzeichnet, dass** die Fäden (13, 14, 23, 24, 25, 34) mit der dazugehörigen Hilfsträgerbahn (5, 20, 21, 22) durch Aufschmelzen der Fäden (13, 14, 23, 24, 25, 34) und/oder der Hilfsträgerbahn(en) (5, 20, 21, 22) verbunden sind.

34. Maschinenfilz nach einem der Ansprüche 24 bis 33, **dadurch gekennzeichnet, dass** die Hilfsträgerbahn(en) (5, 20, 21, 22) in einem nicht oder allenfalls so beschädigten Zustand vorliegt, dass sie die Längsfäden (13, 14) bzw. Querfäden (23, 24, 25, 34) positionsstabilisierend verbindet.

35. Maschinenfilz nach einem der Ansprüche 24 bis 34, **dadurch gekennzeichnet, dass** die Hilfsträgerbahn(en) (5, 20, 21, 22) als Netzwerk, Faservlies und/oder gelochte Folie ausgebildet ist bzw. sind.

36. Maschinenfilz nach einem der Ansprüche 24 bis 35, **dadurch gekennzeichnet, dass** die Hilfsträgerbahn(en) ein Flächengewicht von 20 bis 250 g/m², vorzugsweise von 30 bis 200 g/m² hat bzw. haben.

37. Maschinenfilz nach einem der Ansprüche 24 bis 36, **dadurch gekennzeichnet, dass** zwischen zumindest zwei Längsfadengelegen eine weitere Materialbahn angeordnet ist.

## Claims

1. A method for manufacturing a machine felt (35) of finite length, in which firstly a tube having at least one longitudinal yarn layer, made up respectively of longitudinal yarns (13, 14) proceeding in parallel fashion, is manufactured with a peripheral length that corresponds to at least double the length of the machine felt (35) to be produced, and with a width that corresponds at least to the width of the machine felt (35) to be produced; and in which the tube is then compressed into a flattened tube (16) with mutual abutment of its inner sides and with the formation of front ends (36, 37) and of longitudinal yarn loops (39, 40) there which are exposed by the removal of fibers of a previously applied fiber batt layer (38), with formation of a respective channel (41, 42) extending along the associated front end (36, 37), **characterized in that** firstly at least one auxiliary carrier web (5) is manufactured with a width that is less than that of the machine felt (35) that is to be produced, that for the longitudinal yarns (13, 14) and/or for the at least one auxiliary carrier web (5), at least in part a material is used that has the property of absorbing laser energy and of being capable of being brought by means of laser energy, at least superficially and at least partially, to melting temperature, that the longitudinal yarns (13, 14) are brought together with the auxiliary carrier web (5) in its longitudinal direction and connected to one another by the action of a laser beam, that the auxiliary carrier web(s) (5) is or are helically wound until the tube is formed, and that upon exposure of the longitudinal yarn loops (39, 40), the portion of the auxiliary carrier web(s) (5) present there is also removed.

2. The method according to Claim 1, **characterized in that** at least one transverse yarn layer, having transverse yarns (23, 24, 25, 34) proceeding continuously and parallel to one another over the width of the tube or flattened tube (16), are applied onto the inner and/or outer side of the tube or at least on one of the two outer sides of the flattened tube (16).

3. The method according to Claim 2, **characterized in that** the transverse yarn layer or layers is or are applied in such a way that it or they is or are located externally and/or internally after connection of the front ends (36, 37) of the machine felt (35).

4. The method according to Claim 2 or 3, **characterized in that** for manufacture of the transverse yarn layer, firstly individual carrier module segments (17, 18, 19) are manufactured, having an extension in one direction of the carrier module segments (17, 18, 19) that corresponds to the width necessary for manufacture of the completed machine felt (35), wherein the carrier module segments (17, 18, 19) each being constituted by the combination of an auxiliary carrier web (20, 21, 22) with yarns (23, 24, 25, 34) fastened thereonto, and that the auxiliary carrier web (20, 21, 22) and/or the yarns (23, 24, 25, 34) have the property of absorbing laser energy and of being capable of being brought by means of laser energy, at least superficially and at least partially, to melting temperature, that the connection between the auxiliary carrier web(s) (20, 21, 22) and the yarns (23, 24, 25, 34) is produced by the action of a laser beam, and that the carrier module segments (17, 18, 19) are successively placed on and against one another onto the tube or the flattened tube (16) in its longitudinal direction, in such a way that the transverse yarn layer is thereby created.

5. The method according to Claim 4, **characterized in that** the auxiliary carrier web(s) (20, 21, 22) for the carrier module segments (17, 18, 19) is manufactured with an extension, transversely to the yarns (23, 24, 25, 34), of 0.4 to 6 m.

6. The method according to one of Claims 1 to 5, **characterized in that** the auxiliary carrier web(s) (5) for the longitudinal yarns (13, 14) is or are manufactured with a width from 0.2 m to 1.5 m.

7. The method according to one of Claims 1 to 6, **characterized in that** the auxiliary carrier web(s) (5, 20, 21, 22) has or have a structural strength such that after the machine felt is completed, they exist in a state that is undamaged or at most damaged so that they still connect the yarns (13, 14, 23, 24, 25, 34) in positionally stabilizing fashion.

8. The method according to one of Claims 1 to 7, **characterized in that** a mesh, a fiber batt, and/or a perforated film is or are used for the auxiliary carrier web(s) (5, 20, 21, 22).

9. The method according to one of Claims 1 to 8, **characterized in that** the auxiliary carrier web(s) (5, 20, 21, 22) has or have a basis weight from 20 to 250 g/m², preferably from 30 to 200 g/m².

10. The method according to one of Claims 1 to 9, **characterized in that** the yarns (13, 14, 23, 24, 25, 34) are arranged parallel to the parallel side edges of the respective auxiliary carrier web (5, 20, 21, 22).

11. The method according to one of Claims 1 to 10, **characterized in that** for the yarns (13, 14, 23, 24, 25, 34) and/or for the at least one auxiliary carrier web (5, 20, 21, 22), a material is used which contains an additive that makes the yarns (13, 14, 23, 24, 25, 34) or the auxiliary carrier web(s) (5, 20, 21, 22) capable of absorbing laser energy.

12. The method according to one of Claims 1 to 11, **characterized in that** the mutually abutting edges (9, 10; 26-31) of the auxiliary carrier web(s) (5, 20, 21, 22) are connected to one another.

13. The method according to Claim 12, **characterized in that** the edges are caused to overlap and are connected to one another in the overlap region.

14. The method according to Claim 12, **characterized in that** the edges (9, 10; 26-31) are butted against one another.

15. The method according to one of Claims 12 to 14, **characterized in that** the edges are stitched and/or welded and/or adhesively bonded to one another.

16. The method according to Claim 14 or 15, **characterized in that** the edges (9, 10; 26-31) are equipped with successive, complementary projections (11, 32) and indentations (12, 33), and that the edges (9, 10; 26-31) are mutually abutted so that they interengage with their projections (11, 32) and indentations (12, 33), and that projections (11, 32) of the mutually abutting edges (9, 10; 26-31) are connected to one another.

17. The method according to Claim 16, **characterized in that** after interengagement of the projections (11, 32) and indentations (12, 33), at least one yarn (14, 34) is laid over the projections (11, 32) and fastened to them.

18. The method according to Claim 17, **characterized in that** prior to interengagement of the projections (11, 32) and indentations (12, 33), at least one yarn (14, 34) is laid over the projections (11, 32) and indentations (12, 33) and connected, at at least one edge (9, 10; 26-31), to the projections (11, 32), and that after interengagement of the projections (11, 32) and indentations (12, 33), the at least one yarn (14, 34) is also fastened to the projections (11, 32) of the butt-joining edge (9, 10; 26-31).

19. The method according to Claim 18, **characterized in that** at least one yarn (14, 34) is connected to the projections (11, 32) of both edges (9, 10; 26-31) of the auxiliary carrier web(s) (5, 20, 21, 22).

20. The method according to one of Claims 14 to 19, **characterized in that** the yarns (14, 34) proceeding over the edges (9, 10; 26-31) correspond to the other yarns (13, 23, 24, 25).

21. The method according to one of Claims 16 to 20, **characterized in that** the yarns (14, 34) are applied onto the projections (11, 32) in a quantity and at a spacing such that after interengagement, the yarn density in the region of the edges (9, 10; 26-31) does not deviate from the yarn density elsewhere.

22. The method according to one of Claims 1 to 21, **characterized in that** the fiber batt layer (38) is manufactured by needle felting at least one fiber batt web onto the tube or onto the flattened tube (16).

23. The method according to one of Claims 1 to 22, **characterized in that** the fiber batt layer (38) is manufactured at least in part by the fact that at least one fiber batt web having the width of the auxiliary carrier web (5, 20, 21, 22) is needle felted, before or during winding, onto the combination of auxiliary carrier web (5, 20, 21, 22) and yarns (13, 14, 22, 23, 24, 34).

24. A machine felt (35) of finite length having a carrier and having a fiber batt layer (38) fastened to the carrier, the carrier comprising yarns (13, 14, 22, 23, 24, 34) that form longitudinal yarn layers arranged one above another and having longitudinal yarns (13, 14), extending respectively in parallel fashion and spaced apart from one another, that form longitudinal yarn loops (39, 40) protruding at front ends (36, 37) of the machine felt (35), **characterized in that** the longitudinal yarns (13, 14), with the exception of the longitudinal yarn loops (39, 40), are fastened to at least one auxiliary carrier web (5) present in an undestroyed state.

25. The machine felt according to Claim 24, **characterized in that** the longitudinal yarn structures are constituted by at least one longitudinal yarn helically wound transversely to the longitudinal direction.

26. The machine felt according to Claim 25, **characterized in that** the longitudinal yarn structures are constituted by at least one group, made up respectively of multiple longitudinal yarns (13, 14), that are helically wound transversely to the longitudinal direction.

27. The machine felt according to one of Claims 24 to 26, **characterized in that** the carrier comprises, at least on an outer side of the longitudinal yarn layers, further yarns (23, 24, 25, 34) that constitute at least one transverse yarn layer having transverse yarns (23, 24, 25, 34) proceeding parallel to one another continuously over the width of the machine felt (35).

28. The machine felt according to Claim 27, **characterized in that** a transverse yarn layer is applied exclusively onto that outer side of the longitudinal yarn layers which is externally and/or internally located after connecting of the front ends (36, 37) of the machine felt (35).

29. The machine felt according to Claims 27 and 28, **characterized in that** the number of yarns per unit length of the longitudinal yarn layers is different than in the transverse yarn layer.

30. The machine felt according to Claim 27 or 28, **characterized in that** the number of yarns in the transverse yarn layer is between 20 and 100 yarns per cm, preferably between 30 and 60 yarns per cm.

31. The machine felt according to one of Claims 24 to 30, **characterized in that** the number of yarns of the longitudinal yarn layers is between 10 and 100 yarns per cm, preferably between 20 and 50 yarns per cm.

32. The machine felt according to one of Claims 24 to 31, **characterized in that** yarns (13, 14, 23, 24, 25, 34) contain an additive that makes them capable of absorbing laser energy.

33. The machine felt according to Claim 32, **characterized in that** the yarns (13, 14, 23, 24, 25, 34) are connected to the associated auxiliary carrier web (5, 20, 21, 22) by fusing of the yarns (13, 14, 23, 24, 25, 34) and/or of the auxiliary carrier web(s) (5, 20, 21, 22).

34. The machine felt according to one of Claims 24 to 33, **characterized in that** the auxiliary carrier web(s) (5, 20, 21, 22) exists in a state that is undamaged or damaged at most so that it connects the longitudinal yarns (13, 14) and transverse yarns (23, 24, 25, 34) in positionally stabilizing fashion.

35. The machine felt according to one of Claims 24 to 34, **characterized in that** the auxiliary carrier web(s) (5, 20, 21, 22) is or are configured as a mesh, a fiber batt, and/or a perforated film.

36. The machine felt according to one of Claims 24 to 35, **characterized in that** the auxiliary carrier web(s) (5, 20, 21, 22) has or have a basis weight from 20 to 250 g/m², preferably from 30 to 200 g/m².

37. The machine felt according to one of Claims 24 to 36, **characterized in that** a further material web is arranged between at least two longitudinal yarn layers.

## Revendications

1. Procédé de fabrication de feutre pour machine (35) d'une longueur finie, au niveau duquel tout d'abord un tuyau est fabriqué avec au moins une couche de fils longitudinaux, comprenant respectivement des fils longitudinaux s'étendant parallèlement (13, 14), dans une longueur circonférentielle, qui correspond au moins à la longueur double du feutre pour machine à confectionner (35), et dans une largeur qui correspond au moins à la largeur du feutre pour machine à confectionner (35) et au niveau duquel le tuyau est alors compressé pour devenir un tuyau plat (16) en contact réciproque avec ses côtés intérieurs et avec formation de bords frontaux (36, 37) et à cet endroit de boucles de fils longitudinaux (39, 40), qui sont dégagés en retirant des fibres d'une couche de feutre (38) appliquée antérieurement, avec formation d'un canal (41, 42) s'étendant respectivement le long du bord frontal correspondant (36, 37), **caractérisé en ce que** tout d'abord au moins une bande complémentaire de support (5) est fabriquée dans une largeur qui est inférieure à celle du feutre pour machine à confectionner (35), que pour les fils longitudinaux (13, 14) et/ou pour la bande complémentaire de support minimum (5), un matériel est utilisé au moins en partie, présentant la propriété d'absorber l'énergie laser et au moyen d'énergie laser pouvant être amené à la température de fusion au moins superficiellement et au moins partiellement , que les fils longitudinaux (13, 14) sont réunis avec la bande complémentaire de support correspondante (5) dans leur sens de la longueur et reliés entre eux sous l'effet d'un rayon laser, que la / les bandes complémentaires de support (5) est ou sont enroulée (s) en forme d'hélice jusqu'à ce que le tuyau soit formé, et que lors du dégagement des boucles de fils longitudinaux (39, 40) la partie disponible à cet endroit de bande (s) complémentaire (s) de support (5) soit enlevée.

2. Procédé selon revendication 1, **caractérisé en ce que** sur le côté intérieur et / ou extérieur du tuyau ou au moins sur l'un des deux côtés extérieurs du tuyau plat (16) au moins un non-tissé de fils transversaux est apporté avec des fils transversaux (23, 24, 25, 34) continus s'étendant parallèlement les uns aux autres sur la largeur du tuyau ou tuyau plat (16).

3. Procédé selon revendication 2, **caractérisé en ce que** le ou les non-tissés de fils transversaux est / sont apporté (s) de telle manière qu'il / ils est / sont situé (s) à l'intérieur et / ou à l'extérieur après raccord des bords frontaux (36, 37) du filtre pour machine.

4. Procédé selon revendication 2 ou 3, **caractérisé en ce que** pour la fabrication de la couche de fils transversaux, tout d'abord des sections de module de support séparées (17, 18, 19) sont fabriquées avec une extension dans une direction des sections de module de support (17, 18, 19), qui correspond à la largeur nécessaire pour la fabrication du feutre pour machine fini (35), sachant que les sections de module de support (17, 18, 19) sont respectivement formés à partir de la combinaison d'une bande complémentaire de support (20, 21, 22) avec des fils fixés dessus (23, 24, 25, 34) et que la bande complémentaire de support (20, 21, 22) et / ou les fils (23, 24, 25, 34) ont la propriété d'absorber l'énergie laser et au moyen de l'énergie laser peuvent être amenés à la température de fusion au moins superficiellement et au moins partiellement, que la liaison entre la / les bande(s) complémentaire(s) de support (20, 21, 22) et les fils (23, 24, 25, 34) soit fabriquée sous l'effet d'un rayon laser et que les sections de module de support (17, 18, 19) sont mises sur le tuyau ou le tuyau plat (16) dans son sens longitudinal, successivement l'une à côté de l'autre et l'une sur l'autre, de telle manière que par cela, la couche de fils transversaux soit constitué.

5. Procédé selon revendication 4, **caractérisé par** ce que le / les bande(s) complémentaire(s) de support (20, 21, 22) pour les sections de module de support (17, 18, 19) est fabriquée dans une extension transversalement aux fils (23, 24, 25, 34) de 0,4 à 6 m.

6. Procédé selon l'une des revendications 1 à 5, **caractérisé en ce que** la / les bande(s) complémentaires(s) de support (5) pour les fils longitudinaux (13, 14) est / sont fabriquée (s) dans une largeur de 0,2 m à 1,5 m.

7. Procédé selon l'une des revendications 1 à 6, **caractérisé en ce que** la / les bande(s) complémentaires(s) de support (5, 20, 21, 22) a / ont une telle stabilité de structure qu'elles sont disponibles après la finalisation du feutre pour machine dans un état non endommagé ou endommagé éventuellement de telle manière qu'elles relient les fils (13, 14, 23, 24, 25, 34) encore de manière à stabiliser la position.

8. Procédé selon l'une des revendications 1 à 7, **caractérisé en ce que** pour la / les bande(s) complémentaire(s) de support (5, 20, 21, 22) un réseau, un feutre et / ou une feuille ajourée est ou sont utilisé(s).

9. Procédé selon l'une des revendications 1 à 8, **caractérisé en ce que** la / les bande(s) complémentaire(s) de support (5, 20, 21, 22) a ou ont un grammage de 20 à 250 g/m2, de préférence de 30 à 200 g/m2.

10. Procédé selon l'une des revendications 1 à 9, **caractérisé en ce que** les fils (13, 14, 23, 24, 25, 34) sont placés parallèlement aux bords latéraux parallèles de la bande complémentaire correspondante (5, 20, 21, 22).

11. Procédé selon l'une des revendications 1 à 10 **caractérisé en ce que**, pour les fils (13, 14, 23, 24, 25, 34) et / ou la bande complémentaire de support minimum (5, 20, 21, 22), un matériau est utilisé qui contient un additif, qui donne aux fils (13, 14, 23, 24, 25, 34) ou à la / aux bande(s) complémentaire(s) de support (5, 20, 21, 22) une capacité d'absorption pour l'énergie laser.

12. Procédé selon l'une des revendications 1 à 11, **caractérisé en ce que** les bordures situées les unes à côté des autres (9, 10; 26 - 31) sont reliées à la / aux bande(s) complémentaire(s) de support (5, 20, 21, 22) les unes avec les autres.

13. Procédé selon revendication 12, **caractérisé ce que** les bordures sont mises en recouvrement et reliées entre elles dans la zone de recouvrement.

14. Procédé selon revendication 12, **caractérisé en ce que** les bordures (9, 10; 26 - 31) sont posées les unes à côté des autres, bord à bord.

15. Procédé selon l'une des revendications 12 à 14, **caractérisé en ce que** les bordures sont recousues et / ou thermosoudées et / ou collées les unes avec les autres.

16. Procédé selon revendication 14 ou 15, **caractérisé en ce que** les bordures (9, 10; 26 - 31) sont pourvues d'avancées (11, 32) et de creux complémentaires qui se succèdent les uns aux autres et que les bordures (9, 10 ; 26, 31) sont jointes les unes aux autres de telle manière qu'elles ont prise les unes dans les autres avec leurs avancées (11, 32) et creux (12, 33) et que des avancées (11, 32) des bordures situées les unes contre les autres (9, 10 ; 26, 31) sont reliées les unes aux autres.

17. Procédé selon revendication 16, **caractérisé en ce qu'**après la préhension des avancées (11, 32) et des creux (12, 33) les uns dans les autres, au moins un fil est posé sur les avancées (11, 32) et fixé sur elles.

18. Procédé selon revendications 17, **caractérisé en ce qu'**avant la préhension des avancées (11, 32) et des creux (12, 33) les uns dans les autres, au moins un fil (14, 34) est posé sur les avancées (11, 32) et les creux (12, 33) et est fixé au niveau d'au moins une bordure (9, 10; 26 - 31) aux avancées (11, 32) et qu'après la préhension des avancées (11, 32) et creux (12, 33) les uns dans les autres le fil minimum (14, 34) est aussi fixé sur les avancées (11, 32) de la bordure contiguë.

19. Procédé selon revendication 18, **caractérisé en ce qu'**au niveau des avancées (11, 32) des deux bordures (9, 10 ; 26 - 31) de la / les bande(s) complémentaires(s) de support (5, 20, 21, 22) au moins un fil est (14, 34) est fixé.

20. Procédé selon l'une des revendications 14 à 19, **caractérisé en ce que** les fils (14, 34) s'étendant sur les bordures (9, 10 ; 26 - 31) correspondent aux fils restants (13, 23, 24, 25).

21. Procédé selon l'une des revendications 16 à 21, **caractérisé en ce que** les fils (14, 34) sont mis sur les avancées (11, 32) dans un nombre et à une distance faisant que l'épaisseur de fil après le préhension au niveau des bordures (9, 10 ; 26 - 31) ne diffère en outre pas de l'épaisseur de fil.

22. Procédé selon l'une des revendications 1 à 21, **caractérisé en ce que** la couche de non-tissé (38) est confectionnée par le fait que sur le tuyau ou sur le tuyau plat (16) au moins une bande de non-tissé est aiguilletée.

23. Procédé selon l'une des revendications 1 à 22, **caractérisé en ce que** la couche de non-tissé (38) est confectionnée au moins en partie par le fait que sur la combinaison de bande complémentaire de support (5, 20, 21, 22) et fils (13, 14, 22, 23, 24, 34) au moins une bande de feutre est aiguilletée dans la largeur de la bande complémentaire de support (5, 20, 21, 22) avant ou pendant l'enroulement.

24. Feutre pour machine (35) d'une longueur finie avec un support et avec une couche de feutre (38) fixée sur le support, sachant que le support présente des fils (13, 14, 22, 23, 24, 34) qui forment des non-tissés placés les uns sur les autres avec des fils longitudinaux (13, 14) s'étendant respectivement parallèlement et distants les uns des autres, qui forment sur les bords frontaux (36, 37) du feutre pour machine (35) des boucles de fils longitudinaux (39, 40) susdites, **caractérisé en ce que** les fils longitudinaux (13, 14) à l'exception des boucles de fils longitudinaux (39, 40) sont fixés à au moins une bande complémentaire de support (5) qui existe dans un état non détruit.

25. Feutre pour machine selon revendication 24, **caractérisé en ce que** les couches de fils longitudinaux sont formés d'au moins un fil longitudinal enroulé en forme d'hélice transversalement au sens longitudinal.

26. Feutre pour machine selon revendication 25, **caractérisé en ce que** les couches de fils longitudinaux sont formés d'au moins un groupe, composés respectivement de plusieurs fils longitudinaux (13, 14), qui sont enroulés en forme d'hélice transversalement à la longueur longitudinale.

27. Feutre pour machine selon l'une des revendications 24 à 26, **caractérisé en ce que** le support présente d'autres fils (23, 24, 25, 34) au moins sur un côté extérieur des non-tissés de fils longitudinaux, qui forme au moins une couche de fils transversaux avec des fils transversaux (23, 24, 25, 34) continus s'étendant parallèlement les uns aux autres sur la largeur du feutre pour machine (35).

28. Feutre pour machine selon revendication 27, **caractérisé en ce qu'**un non-tissé de fils transversaux est posé exclusivement sur le côté extérieur des couches de fils longitudinaux qui est situé à l'extérieur et / ou à l'intérieur, après avoir relié les bords frontaux (36, 37) du feutre pour machine (35).

29. Feutre pour machine selon les revendications 27 et 28, **caractérisé en ce que** le nombre de fils par unité de longueur des couches de fils longitudinaux n'est pas le même que dans la couche de fils transversaux.

30. Feutre pour machine selon revendication 27 ou 28, **caractérisé en ce que** le nombre de fils dans la couche de fils transversaux est de 20 à 100 fils par cm, de préférence de 30 à 60 fils par cm.

31. Feutre pour machine selon l'une de revendications 24 à 30, **caractérisé en ce que** le nombre de fils des couches de fils transversaux est de 10 à 100 fils par cm, de préférence entre 20 et 50 fils par cm.

32. Feutre pour machine selon l'une des revendications 24 à 31, **caractérisé en ce que** des fils (13, 14, 23, 24, 25, 34) contiennent un additif qui leur donne une capacité d'absorption pour l'énergie laser.

33. Feutre pour machine selon revendication 32, **caractérisé en ce que** les fils (13, 14, 23, 24, 25, 34) sont reliés avec la bande complémentaire de support correspondante (5, 20, 21, 22) par fusion des fils (13, 14, 23, 24, 25, 34) et / ou de la / des bande(s) complémentaire(s) de support (5, 20, 21, 22).

34. Feutre pour machine selon l'une des revendications 24 à 33, **caractérisé en ce que** la bande complémentaire de support (5, 20, 21, 22) est disponible dans un état non ou endommagé éventuellement de telle manière qu'elle relie les fils longitudinaux (13, 14) ou les fils transversaux (23, 24, 25, 34) en stabilisant la position.

35. Feutre pour machine selon l'une des revendications 24 à 34, **caractérisé en ce que** la / les bande(s) complémentaire(s) de support (5, 20, 21, 22) est ou sont formée(s) en tant que réseau, feutre et / ou feuille ajourée.

36. Feutre pour machine selon l'une des revendications 24 à 35, **caractérisé en ce que** la / les bande(s) complémentaire(s) de support a ou ont un grammage de 20 à 250 g/m2, de préférence de 30 à 200 g/m2.

37. Feutre pour machine selon l'une des revendications 24 à 36, **caractérisé en ce qu'**entre deux couches de fils longitudinaux minimum, est placée une autre bande de matériau.
